# EUROPÄISCHE PATENTSCHRIFT

(11) **EP 1 004 859 B1**
(45) Veröffentlichungstag und Bekanntmachung des Hinweises auf die Patenterteilung: **06.10.2004**
(21) Anmeldenummer: 99123056.6
(22) Anmeldetag: 20.11.1999
(51) Int. Cl.: G01G 19/52, G01N 5/04

(54) **Oberschalige Trocknungswaage**
Top loading drying balance
Balance de séchage à plateau supérieur

(30) Priorität: 26.11.1998 DE 19854563
(43) Veröffentlichungstag der Anmeldung: 31.05.2000
(73) Patentinhaber: SARTORIUS AG, 37075 Göttingen (DE)
(72) Erfinder: Spannagel, Wilfried, 38081 Göttingen (DE); Heine, August, 37434 Bodensee (DE); Winkler, Norbert, 37176 Nörten-Hardenberg (DE)

(56) Entgegenhaltungen:
- DE-A- 3 615 660
- DE-U- 29 603 227
- GB-A- 2 278 202

## Beschreibung

Die Erfindung bezieht sich auf eine oberschalige Trocknungswaage mit einer Waagschale, die sich auf einem Wägesystem abstützt, und mit einer Strahlungsquelle zur Erwärmung und Trocknung des Wägegutes auf der Waagschale.

Waagen dieser Art sind allgemein bekannt und z.B. in der DE 36 15 660 C2 oder dem DE-GM 93 15 014 beschrieben.

Um die Trocknungswaage mit der zu messenden Probe zu beschicken, ist es in der DE 36 15 660 C2 vorgesehen, dass die Strahlungsquelle hinter dem Wägesystem mit der Waagschale angeordnet ist und dass die Wärmestrahlung über einen hochklappbaren Umlenkreflektor auf die Waagschale mit der Probe reflektiert wird. Diese Anordnung führt jedoch wegen des großen Abstandes zwischen Strahlungsquelle und Probe und wegen der Reflexionsverluste am Umlenkreflektor zu einem nicht optimalen energetischen Wirkungsgrad.

In dem DE-GM 93 15 014 oder in dem DE-GM-29603227 ist deshalb vorgesehen, dass sich die Waagschale mit der Probe während des Trocknens direkt unter der Strahlungsquelle befindet und zum Beschicken aus dem Gehäuse der Trocknungswaage ausfahrbar ist. Diese Ausfahrbarkeit der Waagschale erfordert jedoch bei feststehendem Wägesystem eine komplizierte teleskopartig ausziehbare Verbindung zwischen Waagschale und Wägesystem, die anfällig gegen vertikale Schwingungen ist und daher die Ermittlung des Wägeergebnisses beim Einfüllen der Probe in die Waagschale erschwert. In dem DE-GM 93 15 014 ist als weitere Ausführungsform deshalb vorgesehen, dass das komplette Wägesystem zusammen mit der Waagschale ausfährt. Aber auch diese Lösung ist wägetechnisch ungünstig: Im ausgefahrenen Zustand ist die Waage durch die vorkragende Anordnung des Wägesystems sehr erschütterungsempfindlich. Außerdem sind die Anforderungen an die Führung zum Ausfahren des Wägesystems sehr hoch, da das Wägesystem in der eingefahrenen und in der ausgefahrenen Stellung exakt die gleiche horizontale Ausrichtung aufweisen muß, damit die Wägeergebnisse in beiden Stellungen miteinander vergleichbar sind.

Aufgabe der Erfindung ist es daher, eine Waage der eingangs genannten Art anzugeben, bei der Probe und Strahlungsquelle nahe beieinander angeordnet sind, bei der die Waagschale zum Beschicken leicht zugänglich ist und bei der das Wägesystem mit der Waagschale stabil im Gehäuse der Trocknungswaage eingebaut sein kann.

Erfindungsgemäß wird dies dadurch erreicht, dass die Strahlungsquelle auf einem horizontal verfahrbaren Schlitten derart angeordnet ist, dass die Waagschale in der Beschickungsposition des Schlittens frei zugänglich und in der Trocknungsposition des Schlittens von der Strahlungsquelle überdeckt ist.

Das Wägesystem mit der Waagschale ist also fest im Gehäuse der Trocknungswaage eingebaut. Zum Beschicken wird die Waagschale durch das Zurückfahren der Strahlungsquelle zugänglich gemacht. Die Führung für die Strahlungsquelle kann dabei einfach gehalten werden, da an die Positioniergenauigkeit der Strahlungsquelle keine hohen Ansprüche gestellt werden.

Zur Beobachtung des Trocknungsvorganges weisen Trocknungswaagen häufig ein vertikales Sichtfenster vor der Waagschale mit der Probe auf. In einer vorteilhaften Weiterbildung der Erfindung ist dabei vorgesehen, dass dieses Sichtfenster ebenfalls mit dem Schlitten für die Strahlungsquelle verfahrbar ist, dass das Sichtfenster zusätzlich vertikal beweglich ist und dass beim Zurückfahren des Schlittens das Sichtfenster vertikal angehoben wird. Im zurückgefahrenen Zustand des Schlittens (Beschickungsstellung) ist das Sichtfenster also angehoben und beim Vorfahren des Schlittens wird das Sichtfenster in angehobener Stellung gehalten und erst nach dem Überfahren der Waagschale mit der Probe abgesenkt. Dadurch wird verhindert, dass eine höhere Probenschicht beim Verfahren des Schlittens vom Sichtfenster weggeschoben wird. Das Anheben des Sichtfensters erfolgt vorteilhafterweise jedoch nur bis dicht unterhalb der Strahlungsquelle. Dadurch wird bei eventuell zu hoch eingefüllter Probe diese durch das Sichtfenster beim Vorfahren des Schlittens planiert und ein Kontaktieren der Probe mit der Strahlungsquelle verhindert. Das Sichtfenster lässt sich leicht säubern.

Weitere vorteilhafte Ausgestaltungen und konstruktive Einzelheiten ergeben sich aus den weiteren abhängigen Ansprüchen.

Die Erfindung wird im folgenden anhand der schematischen Figuren beschrieben.
Dabei zeigt:
- Fig. 1: eine perspektivische Ansicht der Trocknungswaage in der Beschickungsstellung,
- Fig. 2: die Trocknungswaage aus Fig. 1 während des Trocknungsvorganges,
- Fig. 3: Details des verfahrbaren Schlittens in Seitenansicht in der Beschickungsstellung und
- Fig. 4: den verfahrbaren Schlitten aus Fig. 3 während des Trocknungsvorganges.

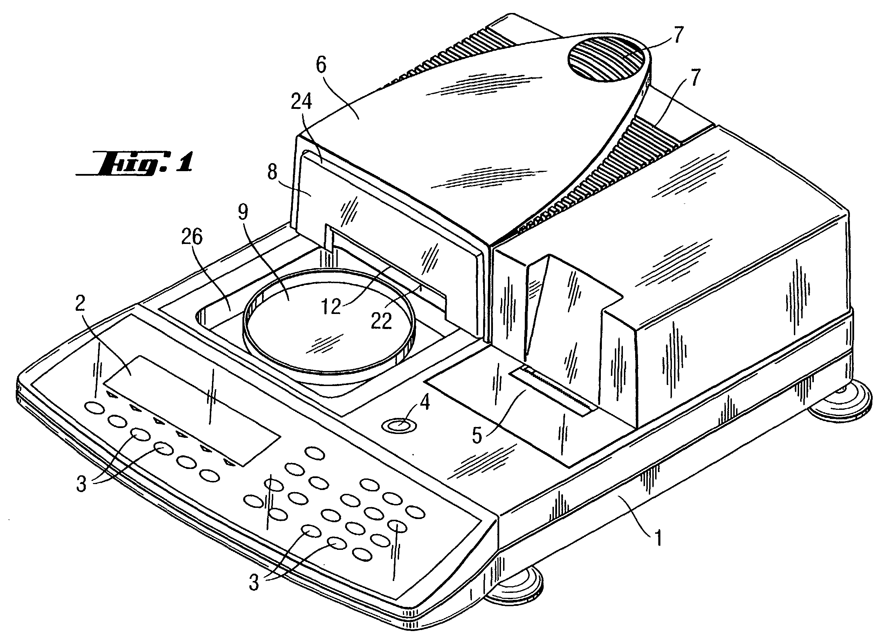

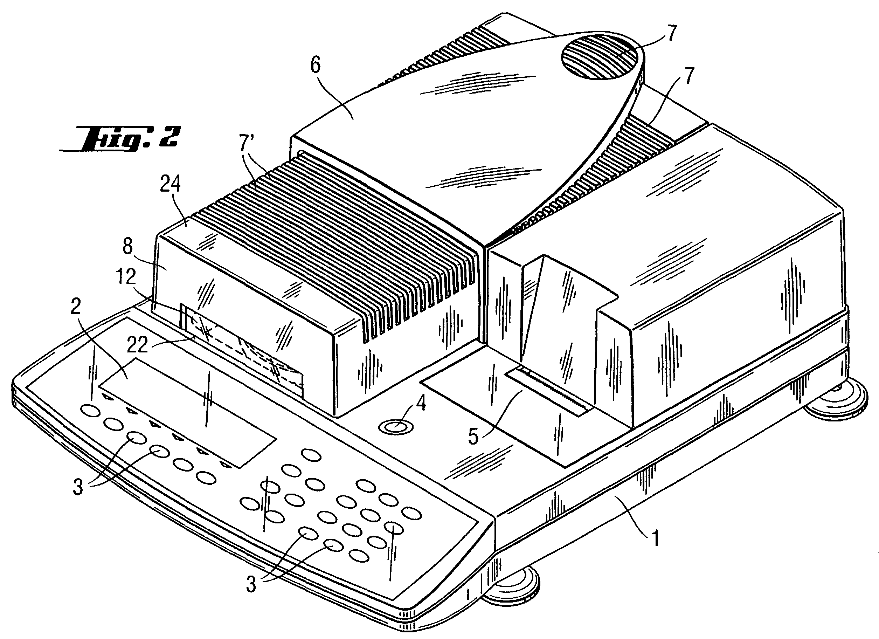

Die Figuren 1 und 2 zeigen in einer perspektivischen Darstellung die erfindungsgemäße elektronische Trocknungswaage einmal in der Beschickungsstellung (Fig. 1) und einmal in der Stellung während des Trocknungsvorganges (Fig. 2). Man erkennt in beiden Figuren das Gehäuse 1, die Anzeige 2, Bedienungstasten 3, eine Libelle 4, einen Drucker 5, ein Abdeckgehäuse 6 für die darunter befindliche Strahlungsquelle 10 und Entlüftungsöffnungen 7. In Fig. 1 in der Beschickungsstellung ist die Waagschale 9 frei zugänglich. Der Bediener der Waage kann die zu untersuchende Probe in die Waagschale 9 eindosieren und dabei die direkt davor befindliche Anzeige 2 leicht im Auge behalten, um das gewünschte Probengewicht zu erreichen. Die Waagschale 9 ist in einer Vertiefung angeordnet, um sie vor Luftzug zu schützen. Diese Vertiefung ist mit einem Blech- oder Kunststoffteil 26 verkleidet, das zum Säubern herausgenommen werden kann. Die Strahlungsquelle 10 ist unter dem Abdeckgehäuse 6 verborgen. Sie ist zusammen mit der vorderen Abdeckung 8 und dem Sichtfenster 12 auf einem horizontal verfahrbaren Schlitten angeordnet, der in der Beschickungsstellung gemäß Fig. 1 ganz zurückgefahren ist und der für den Trocknungsvorgang motorisch nach vorne verschoben werden kann.

Die Endstellung für den Trocknungsvorgang ist in Fig. 2 dargestellt. Die vordere Abdeckung 8 und das Sichtfenster 12 sind ganz nach vorne verschoben und die - jetzt eingeschaltete - Strahlungsquelle 10 befindet sich unter der Schlittenabdeckung 24 mit Entlüftungsöffnungen 7' direkt oberhalb der Waagschale. Die Schlittenabdeckung 24 umschließt die Strahlungsquelle 10 seitlich und nach oben und stellt einen Berührungsschutz für die Strahlungsquelle dar. Schlittenabdeckung 24 und Strahlungsquelle 10 sind dabei gemeinsam zusammen mit dem Schlitten verfahrbar. Die Waagschale 9 mit dem darunter befindlichen Wägesystem bleibt gehäusefest und wird nicht verschoben.

In Fig. 2 liegt das Sichtfenster 12 mit seiner Unterkante 22 auf der Oberseite des Gehäuses 1 auf. Der Raum oberhalb der Waagschale ist dadurch nach vorne abgeschlossen, die Waagschale mit der Probe kann aber trotzdem vom Bediener der Waage während des Trocknungsvorganges beobachtet und kontrolliert werden. - In der in Fig. 1 gezeigten, zurückgefahrenen Stellung des Schlittens ist das Sichtfenster 12 demgegenüber angehoben. Dieses Anheben des Sichtfensters 12 verhindert, dass das Sichtfenster 12 beim Verfahren des Schlittens den oberen Teil der Probe auf der Waagschale wegschiebt. Deshalb bleibt das Sichtfenster 12 beim Vorfahren aus der in Fig. 1 gezeigten Stellung so lange angehoben, bis es die Waagschale 9 ganz überfahren hat und senkt sich erst kurz vor dem Erreichen der in Fig. 2 gezeigten Endstellung ab.

Vorzugsweise werden dem Benutzer verschiedenartige, vorzugsweise austauschbare Strahlungsquellen 10 zur Verfügung gestellt.
Als Strahlungsquelle 10 kann z. B. ein Keramikstrahler oder Metallrohrstrahler verwendet werden, die verstärkt im mittleren Infrarotbereich strahlen oder es wird z. B. ein Halogenstrahler verwendet, der verstärkt im nahen Infrarotbereich strahlt. Die Waagensoftware ist erfindungsgemäß an die verschiedenen zum Einsatz kommenden Arten der Strahlungsquellen 10 zu deren Regelung/Steuerung angepasst.

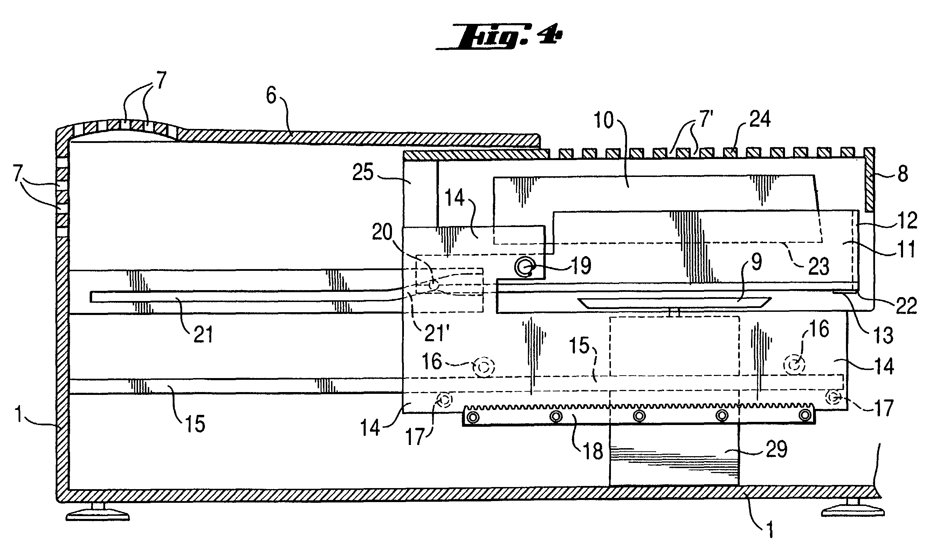

Die jeweilige Strahlungsquelle 10 ist in den Schlitten 14 integriert. Der Austausch der Strahlungsquelle kann entweder dadurch erfolgen, dass z. B. ein Halogenstrahler dem Schlitten 14 entnommen und z. B. gegen einen Keramikstrahler ausgewechselt wird oder es wird ein Modul mit Halogenstrahler gegen ein Modul mit Keramikstrahler getauscht. In der dargestellen Ausführungsform sind die Bauteile 8, 10, 11, 12, 13, 19, 20, 22, 23 und 24 als Modul aus dem Gehäuse 1 entnehmbar und gegen ein anderes Modul mit anderer Strahlungsquelle 10 austauschbar. Hierzu ist es nur notwendig, das Modul in der Position gemäss Fig. 4 weiter nach vorne -gegebenenfalls gegen den Widerstand einer Rastfeder oder eines nachgiebigen Endanschlages z. B. beim Stift 20 oder bei der Lasche 25- zu ziehen und aus der Führungsnut 21 zu heben.

Der Benutzer der Trocknungswaage hat damit die Möglichkeit, zwischen mehreren Arten von Strahlungsquellen zu wählen, um sich den zu untersuchenden unterschiedlichen Proben und deren Bearbeitung anpassen zu können.

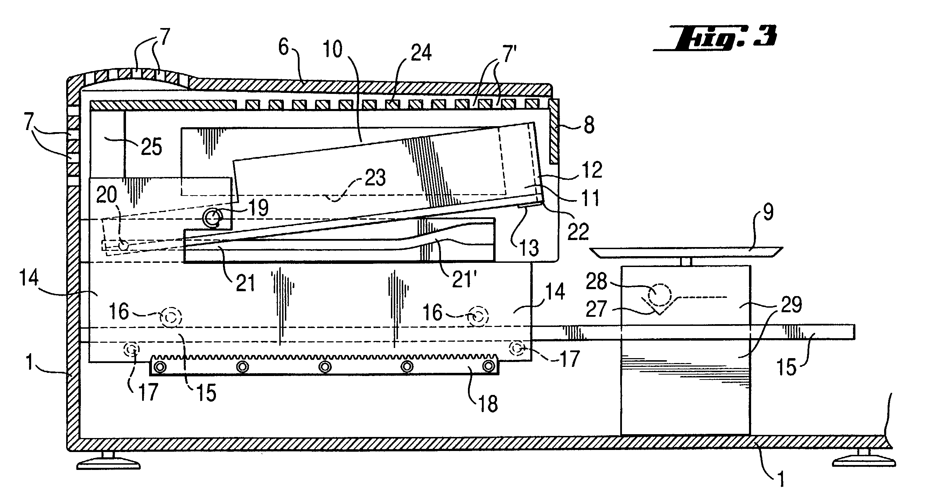

Konstruktive Details der Lagerung des Schlittens 14 für die horizontale Verfahrbarkeit und der Lagerung des Sichtfensters 12 für das vertikale Anheben sind in den Fig. 3 und 4 dargestellt. Beide Figuren sind Seitenansichten bei angeschnittenem Gehäuse, Fig. 3 zeigt den Schlitten 14 in der Beschickungsstellung, Fig. 4 in der Stellung während des Trocknungsvorganges. Der verfahrbare Schlitten 14 wird auf zwei gehäusefesten Führungsschienen 15 durch obere Rollen 16 gehalten und durch untere Rollen 17 gegen Abheben gesichert. Von den beiden Führungsschienen 15 ist in Fig. 3 und 4 nur eine erkennbar, die zweite liegt symmetrisch hinter der Zeichenebene und hält die gegenüberliegende Seite des verfahrbaren Schlittens 14. Der Antrieb der horizontalen Bewegung des Schlittens 14 erfolgt durch einen gehäusefesten - nicht dargestellten - Motor mit je einem Ritzel, das in die Zahnstange 18 und in die entsprechende, gegenüberliegende Zahnstange eingreift. Nicht dargestellte Anschläge und Endschalter begrenzen dabei die seitliche Bewegungsmöglichkeit des Schlittens 14. Am Schlitten 14 ist die Strahlungsquelle 10 befestigt. Außerdem ist am Schlitten 14 mittels einer Achse 19 auf beiden Seiten der Strahlungsquelle 10 je ein Hebel 11 schwenkbar gelagert. Die beiden Hebel 11 tragen an ihrem vorderen Ende das Sichtfenster 12 zwischen sich. Die Lage jedes Hebels 11 wird durch einen Stift 20 bestimmt, der in einer gehäusefesten Führungsnut 21 gleitet. In Fig. 3 in der zurückgefahrenen Stellung des Schlittens 14 befindet sich der Stift 20 im hinteren, tieferen Teil der Führung 21, so dass der Hebel 11 im vorderen Teil hochgeschwenkt ist - dasselbe gilt für den nicht erkennbaren zweiten Hebel, der sich in Fig. 3 und 4 hinter der Strahlungsquelle 10 befindet; damit ist auch das Sichtfenster 12 angehoben.

Beim Vorfahren des Schlittens 14 verbleibt der Hebel 11 zunächst in der in Fig. 3 gezeichneten Schräglage, da die Führungsnut 20 zunächst horizontal verläuft. Erst kurz vor dem Erreichen der in Fig. 4 gezeichneten Endstellung für den Trocknungsvorgang gelangt der Stift 20 in den schrägen Abschnitt 21' der Führungsnut 21, so dass sich das Sichtfenster 12 erst nach dem Überfahren der Waagschale 9 absenkt. In der in Fig. 4 gezeichneten Endstellung liegt der vordere Teil des Hebels 11 mit dem Sichtfenster 12 über einen Puffer 13 auf einem in Fig. 3 und 4 der Übersichtlichkeit halber nicht eingezeichneten Teil des Gehäuses 1 der Trocknungswaage auf.

Der Höhenunterschied in der Führungsnut 21/21' wird vorteilhafterweise so gewählt, dass das Sichtfenster 12 soweit hochschwenkt, dass seine Unterkante 22 etwas unterhalb der Unterkante 23 der Strahlungsquelle 10 liegt (Fig. 3). Dadurch wird beim Vorfahren des Schlittens 14 mit der Strahlungsquelle 10 und dem Sichtfenster 12 bis zur maximal erlaubten Probenhöhe eine Berührung zwischen dem Sichtfenster 12 und der Probe vermieden. Erst wenn der Bediener der Trocknungswaage die Probensubstanz so hoch einfüllt, dass diese die Strahlungsquelle berühren würde, erst dann wird der überstehende Teil der Probensubstanz beim Vorfahren des Schlittens 14 durch das Sichtfenster 12 weggeschoben. Dies führt zwar im allgemeinen zu einem Anhaften von Probensubstanz am Sichtfenster 12, eventuell auch zum Herunterschieben von Probensubstanz von der Waagschale 9. Da das Sichtfenster 12 leicht herausnehmbar ist und da unter der Waagschale 9 sowieso für eine leichte Entfernbarkeit von Probensubstanz, die beim Beschicken der Waagschale daneben fällt, gesorgt sein muß, ist dieses Herunterschieben von Probensubstanz bei zu hohen Proben das kleinere Übel verglichen mit der Gefahr, dass zu hoch aufgetürmte Probensubstanz mit der im allgemeinen heißen Strahlungsquelle in Berührung kommt und dort anhaftet, verklebt und eventuell sogar verkohlt.

In Fig. 3 ist unterhalb der Waagschale 9 das eigentliche Wägesystem schematisch durch einen Kasten 29 angedeutet. In Fig. 4 ist das Wägesystem 29 zum Teil hinter dem vorderen Teil des Schlittens 14 verborgen. Das Wägesystem ist fest im Gehäuse 1 der Trocknungswaage eingebaut, so dass auch bei Erschütterungen das Wägesystem nicht zu Schwingungen gegenüber dem Gehäuse angeregt werden kann. - Weiter ist in Figur 3 und 4 der obere Teil der Schlittenabdeckung 24 und die vordere Abdeckung 8 erkennbar, die zusammen durch seitliche Laschen 25 und weitere, nicht eingezeichnete Verbindungen am Schlitten 14 befestigt sind. Schlittenabdeckung 24 und vordere Abdeckung 8 verfahren daher beide zusammen mit dem Schlitten 14. Weiter erkennt man das Abdeckgehäuse 6, unter dem die Schlittenabdeckung 24 in der Beschickungsstellung gemäß Fig. 3 ganz verschwindet, während in der Trocknungsstellung gemäß Fig. 4 die Schlittenabdeckung 24 zusammen mit dem Schlitten 14 weit aus dem Abdeckgehäuse 6 herausgefahren ist.

Bei genauen Waagen ist es allgemein bekannt, zur Überprüfung und gegebenenfalls zur Nachjustierung der Empfindlichkeit der Waage ein sogenanntes Kalibriergewicht einzubauen, das motorisch oder von Hand mit dem Meßwertaufnehmer der Waage in Wirkverbindung gebracht werden kann. Dies kann vorteilhafterweise auch bei der erfindungsgemäßen Trocknungswaage leicht übernommen werden. Durch den gehäusefesten Einbau des Wägesystems kann auch die Kalibriergewichtsschaltung einschließlich der Bedienungselemente bzw. einschließlich des Betätigungsmotors gehäusefest eingebaut sein. In Fig. 3 ist diese Möglichkeit durch die punktierte Darstellung eines Kalibriergewichtes 28 und der dazugehörigen Betätigungsmechanik 27 schematisch angedeutet, in Fig. 4 der Übersichtlichkeit halber jedoch nicht eingezeichnet.

## Patentansprüche

1. Oberschalige Trocknungswaage mit einer Waagschale (9), die sich auf einem Wägesystem (29) abstützt, mit einer Strahlungsquelle (10) zur Erwärmung und Trocknung des Wägegutes auf der Waagschale, **dadurch gekennzeichnet, dass** die Strahlungsquelle (10) auf einem horizontal verfahrbaren Schlitten (14) derart angeordnet ist, dass die Waagschale (9) in der Beschickungsposition des Schlittens frei zugänglich und in der Trocknungsposition des Schlittens von der Strahlungsquelle (10) überdeckt ist.

2. Oberschalige Trocknungswaage nach Anspruch 1, **dadurch gekennzeichnet, dass** der Schlitten (14) mit unterschiedlichen Strahlungsquellen (10) ausstattbar ist.

3. Oberschalige Trocknungswaage nach Anspruch 1 und 2, **dadurch gekennzeichnet, dass** die unterschiedlichen Strahlungsquellen (10) mit einer an deren Unterschiedlichkeit angepassten Waagensoftware regelbar/steuerbar sind.

4. Oberschalige Trocknungswaage nach Anspruch 1 und 2, **dadurch gekennzeichnet, dass** die Strahlungsquelle (10) ein Keramikstrahler ist.

5. Oberschalige Trocknungswaage nach Anspruch 1 und 2, **dadurch gekennzeichnet, dass** die Strahlungsquelle (10) ein Halogenstrahler ist.

6. Oberschalige Trocknungswaage nach Anspruch 1, 4 und 5, **dadurch gekennzeichnet, dass** die Strahlungsquelle (10) einer Art leicht austauschbar gegen eine Strahlungsquelle einer anderen Art im Gehäuse (1) angeordnet ist.

7. Oberschalige Trocknungswaage nach Anspruch 1, **dadurch gekennzeichnet, dass** der Schlitten (14) und eine Strahlungsquelle (10) ein gemeinsam austauschbares Modul bilden.

8. Oberschalige Trocknungswaage nach Anspruch 1, **dadurch gekennzeichnet, dass** ein Schlitten (14) und eine Strahlungsquelle ein gemeinsam austauschbares Modul bilden.

9. Oberschalige Trocknungswaage nach Anspruch 1, **dadurch gekennzeichnet, dass** der die Strahlungsquelle (10) tragende Schlitten (14) von einer mehrseitig geschlossenen und mit dem Schlitten (14) verfahrbaren Schlittenabdeckung (24) umgeben ist.

10. Oberschalige Trocknungswaage nach Anspruch 9, **dadurch gekennzeichnet, dass** der Schlitten (14) mit der Schlittenabdeckung (24) unter ein mit einer Entlüftung (7) ausgestattetes Abdeckgehäuse (6) verfahrbar ist.

11. Oberschalige Trocknungswaage nach einem der Ansprüche 1 bis 10, **dadurch gekennzeichnet, dass** der Schlitten (14) motorisch angetrieben ist und dazu eine Zahnstange (18) aufweist, in die das Ritzel eines Elektromotors eingreift.

12. Oberschalige Trocknungswaage nach einem der Ansprüche 1 bis 11, **dadurch gekennzeichnet, dass** sich während des Trocknungsvorganges vor der Waagschale (9) mindestens ein vertikales Sichtfenster (12) befindet, dass dieses Sichtfenster (12) ebenfalls mit dem Schlitten (14) für die Strahlungsquelle (10) horizontal verfahrbar ist, dass dieses Sichtfenster (12) zusätzlich vertikal beweglich ist und dass beim Zurückfahren des Schlittens (14) dieses Sichtfenster (12) vertikal angehoben wird.

13. Oberschalige Trocknungswaage nach Anspruch 12, **dadurch gekennzeichnet, dass** das Sichtfenster (12) nur soweit angehoben wird, dass seine Unterkante (22) dicht unterhalb der Unterkante (23) der Strahlungsquelle (10) liegt.

14. Oberschalige Trocknungswaage nach einem der Ansprüche 12 oder 13, **dadurch gekennzeichnet, dass** das Sichtfenster (12) auf beiden Seiten an je einem Hebel (11) befestigt ist und dass beide Hebel (11) am verfahrbaren Schlitten (14) schwenkbar gelagert sind.

15. Oberschalige Trocknungswaage nach Anspruch 14, **dadurch gekennzeichnet, dass** jeder Hebel (11) einen Stift (20) aufweist, der in je einer Führungsnut (21/21') gleitet, und dass die Form der Führungsnut (21/21') den Zeitpunkt und die Amplitude der Verschwenkung der Hebel (11) bestimmt.

16. Oberschalige Trocknungswaage nach einem der Ansprüche 14 oder 15, **dadurch gekennzeichnet, dass** die beiden Hebel (11) seitlich neben der Strahlungsquelle (10) angeordnet sind.

17. Oberschalige Trocknungswaage nach Anspruch 6 - 16, **dadurch gekennzeichnet, dass** die Strahlungsquelle (10), das Sichtfenster (12), der Hebel (11) und die Abdeckung (8,24) ein austauschbares Modul bilden.

18. Oberschalige Trocknungswaage nach Anspruch 1 , **dadurch gekennzeichnet, dass** das Wägesystem (29) eine Kalibriergewichtsschaltung (27) aufweist, die es erlaubt, mindestens ein Kalibriergewicht (28) motorisch in Wirkverbindung mit dem Wägesystem (29) zu bringen.

## Claims

1. Upper pan dry weighing machine with a weighing pan (9), which is supported on a weighing system (29), with a radiation source (10) for heating and drying the material, which is to be weighed, on the weighing pan, **characterised in that** the radiation source (10) is arranged on a horizontally movable carriage (14) in such a manner that the weighing pan (9) is freely accessible in the loading position of the carriage and is covered by the radiation source (10) in the drying position of the carriage.

2. Upper pan dry weighing machine according to claim 1, **characterised in that** the carriage (14) can be equipped with different radiation sources (10).

3. Upper pan dry weighing machine according to claims 1 and 2, **characterised in that** the different radiation sources (10) are regulable or controllable by a weighing machine software adapted to the difference thereof.

4. Upper pan dry weighing machine according to claims 1 and 2, **characterised in that** the radiation source (10) is a ceramic radiator.

5. Upper pan dry weighing machine according to claims 1 and 2, **characterised in that** the radiation source (10) is a halogen radiator.

6. Upper pan dry weighing machine according to claim 1, 4 and 5, **characterised in that** the radiation source (10) of one kind is arranged in the housing (1) to be readily exchangeable with the radiation source of another kind.

7. Upper pan dry weighing machine according to claim 1, **characterised in that** the carriage (14) and a radiation source (10) form a common, exchangeable module.

8. Upper pan dry weighing machine according to claim 1, **characterised in that** a carriage (14) and a radiation source form a common, exchangeable module.

9. Upper pan dry weighing machine according to claim 1, **characterised in that** the carriage (14) carrying the radiation source (10) is surrounded by a carriage cover (24) closed at a plurality of sides and movable together with the carriage (14).

10. Upper pan dry weighing machine according to claim 9, **characterised in that** the carriage (14) together with the carriage cover (24) is movable below a cover housing (6) equipped with ventilation means (7).

11. Upper pan dry weighing machine according to one of claims 1 to 10, **characterised in that** the carriage (14) is motor-driven and for that purpose has a rack (18) in which the pinion of an electric motor engages.

12. Upper pan dry weighing machine according to one of claims 1 to 11, **characterised in that** during the drying process at least one vertical viewing window (12) is disposed in front of the weighing pan (9), that this viewing window (12) is similarly horizontally movable with the carriage (14) for the radiation source (10), that this viewing window (12) is additionally vertically movable and that on movement back of the carriage (14) this viewing window (12) is vertically raised.

13. Upper pan dry weighing machine according to claim 12, **characterised in that** the viewing window (12) is raised only to such an extent that its lower edge (22) lies closely below the lower edge (23) of the radiation source (10).

14. Upper pan dry weighing machine according to one of claims 12 and 13, **characterised in that** the viewing window (12) is fastened on each half two sides to a respective lever (11) and that the two levers (11) are pivotably mounted at the movable carriage (14).

15. Upper pan dry weighing machine according to claim 14, **characterised in that** each lever (11) has a pin (20) which slides in a respective guide groove (21/21') and that the shape of the guide groove (21/21') determines the instant in time and amplitude of the pivotation of the levers (11).

16. Upper pan dry weighing machine according to one of claims 14 and 15, **characterised in that** the two levers (11) are arranged laterally adjacent to the radiation source (10).

17. Upper pan dry weighing machine according to claim 6 - 16, **characterised in that** the radiation source (10), the viewing window (12), the levers (11) and the cover (8, 24) form an exchangeable module.

18. Upper pan dry weighing machine according to claim 1, **characterised in that** the weighing system (29) comprises a calibrating weight circuit (27) which allows at least one calibrating weight (28) to be brought by motor into operative connection with the weighing system (29).

## Revendications

1. Balance de séchage à plateau supérieur, comportant un plateau de balance (9) qui prend appui sur un système de pesage (29), et une source de rayonnement (10) destinée au chauffage et au séchage du produit pesé sur le plateau de la balance, **caractérisé en ce que** la source de rayonnement (10) est disposée sur un chariot (14) pouvant être déplacé horizontalement de telle sorte que le plateau de balance (9) soit librement accessible dans la position d'alimentation du chariot et que, dans la position de séchage du chariot, il soit recouvert par la source de rayonnement (10).

2. Balance de séchage à plateau supérieur selon la revendication 1, **caractérisée en ce que** le chariot (14) peut être équipé de différentes sources de rayonnement (10).

3. Balance de séchage à plateau supérieur selon la revendication 1 ou 2, **caractérisée en ce que** les différentes sources de rayonnement (10) peuvent être réglées / commandées avec un logiciel de balance adapté à leur diversité.

4. Balance de séchage à plateau supérieur selon la revendication 1 ou 2, **caractérisée en ce que** la source de rayonnement (10) est un radiateur en céramique.

5. Balance de séchage à plateau supérieur selon la revendication 1 ou 2, **caractérisée en ce que** la source de rayonnement (10) est un radiateur à halogène.

6. Balance de séchage à plateau supérieur selon les revendications 1, 4 et 5, **caractérisée en ce que** la source de rayonnement (10) d'un type est disposée dans le boîtier (1) de façon à pouvoir être facilement échangée contre une source de rayonnement d'un autre type.

7. Balance de séchage à plateau supérieur selon la revendication 1, **caractérisée en ce que** le chariot (14) et une source de rayonnement (10) constituent un module pouvant être échangé en commun.

8. Balance de séchage à plateau supérieur selon la revendication 1, caractérisée en ce qu'un chariot (14) et une source de rayonnement constituent ensemble un module interchangeable.

9. Balance de séchage à plateau supérieur selon la revendication 1, **caractérisée en ce que** le chariot (14) portant la source de rayonnement (10) est entouré d'un capot de chariot (24) fermé sur plusieurs côtés, et pouvant être déplacé avec le chariot (14).

10. Balance de séchage à plateau supérieur selon la revendication 9, **caractérisée en ce que** le chariot (14) avec le capot de chariot (24) peut être déplacé sous un capot de recouvrement (6) muni d'une ventilation (7).

11. Balance de séchage à plateau supérieur selon l'une quelconque des revendications 1 à 10, **caractérisée en ce que** le chariot (14) est entraîné par voie motorisée, et comporte à cet effet une crémaillère (18) dans laquelle s'engage le pignon d'un moteur électrique.

12. Balance de séchage à plateau supérieur selon l'une quelconque des revendications 1 à 11, **caractérisée en ce que**, pendant le processus de séchage, au moins une fenêtre de visualisation (12) verticale est située devant le plateau de balance (9), **en ce que** cette fenêtre de visualisation (12) peut également être déplacée horizontalement avec le chariot (14) pour la source de rayonnement (10), **en ce que** cette fenêtre de visualisation (12) est en outre mobile verticalement, et **en ce que** cette fenêtre de visualisation (12) est relevée verticalement lors du recul du chariot (14).

13. Balance de séchage à plateau supérieur selon la revendication 12, **caractérisée en ce que** la fenêtre de visualisation (12) n'est relevée qu'à un point tel que son bord inférieur (22) se situe au voisinage immédiat du bord inférieur (23) de la source de rayonnement (10) au-dessous de celle-ci.

14. Balance de séchage à plateau supérieur selon l'une des revendications 12 ou 13, **caractérisée en ce que** la fenêtre de visualisation (12) est fixée des deux côtés sur un levier (11) respectif, et **en ce que** les deux leviers (11) sont montés de façon à pouvoir pivoter sur le chariot (14) mobile.

15. Balance de séchage à plateau supérieur selon la revendication 14, **caractérisée en ce que** chaque levier (11) comporte une broche (20) qui coulisse dans une rainure de guidage (21 / 21'), et **en ce que** la forme de la rainure de guidage (21 / 21') détermine le moment et l'amplitude du pivotement des leviers (11).

16. Balance de séchage à plateau supérieur selon l'une des revendications 14 ou 15, **caractérisée en ce que** les deux leviers (11) sont disposés latéralement à côté de la source de rayonnement (10).

17. Balance de séchage à plateau supérieur selon l'une quelconque des revendications 6 à 16, **caractérisée en ce que** la source de rayonnement (10), la fenêtre de visualisation (12), le levier (11) et le capot (8, 24) constituent un module interchangeable.

18. Balance de séchage à plateau supérieur selon la revendication 1, **caractérisée en ce que** le système de pesage (29) comporte un montage à poids de tarage (27), qui permet de mettre en liaison active par voie motorisée avec le système de pesage (29), au moins un poids de tarage (28).
